# EUROPEAN PATENT APPLICATION

(11) **EP 3 501 966 A1**
(43) Date of publication of application: **26.06.2019**
(21) Application number: 17209134.0
(22) Date of filing: 20.12.2017
(51) Int. Cl.: B63B 1/12

(54) **AN UNMANNED MARINE SURFACE VESSEL**

(71) Applicant: Xocean Limited, A91 PK18 Co. Louth (IE)
(72) Inventor: IVES, James, Co. Louth, A91 PK18 (IE); CARLISLE, Andrew, Belfast, Co. Andtrim BT8 7YT (GB)
(74) Representative: FRKelly

(57) **Abstract**

The present invention provides an unmanned marine surface vessel comprising a pair of outer hulls and a centre hull, the centre hull being dimensioned to define a shallower draught than the outer hulls when the vessel is deployed on the surface of a body of water, and which vessel is therefore adapted to provide a relatively low cost, low risk, and long range means of collecting large quantities of ocean data.

## Description

### Field of the invention

This invention relates to an unmanned and preferably autonomous marine surface vessel, and in particular a marine surface vessel configured for so called "over the horizon" deployment for the purposes of collecting and optionally transmitting data, for example via a satellite link or the like.

### Background of the invention

Ocean Data is required by multiple industries, examples including:
▪ Industrial: Oil & Gas, Seabed Mining, Interconnectors
▪ Fisheries: Stock Management, Aquaculture, Protection
▪ Offshore Renewables: Offshore Wind, Tidal Energy, Wave Energy.
▪ Transport: Shipping, Ports & Harbours.
▪ Safety & Security: Maritime Safety, Border Surveillance.

The type of data that is collected varies from industry to industry, and the type of sensors and other equipment utilised in said data collection can therefore also vary significantly. The following lists the type of sensors and other equipment based on the particular survey to be undertaken:

Oceanography, Hydrography & Meteorological Surveys
▪ ADCP Acoustic Doppler Current Profiler
▪ CTD Conductivity, Temperature & Depth Profiler
▪ Magnetometer (detection of seabed metallic objects)
▪ Side Scan / Sub Bottom Profiler (seabed properties)
▪ Single / Multibeam Echo Sounder (seabed mapping)
▪ Weather Station (wind speed, direction, temperature, pressure etc)

Environmental Surveys
▪ Acoustic Fish Count (fisheries management)
▪ Chemical / Biological Sensors (measurement of oxygen, chlorophyll etc)
▪ PAM Passive Acoustic Monitoring (monitoring of marine mammals and noise)

Subsea Communications
▪ Acoustic Modem (communication with subsea systems)
▪ Ultra-Short Baseline Positioning (underwater acoustic positioning)

Vessel Surveillance
▪ AIS Automatic Identification System (vessel identification)
▪ Hydrophone (vessel detection)
▪ Thermal Camera

Collection of ocean data is traditionally performed using a conventional vessel fitted with an array of the above sensors, which vessel is then manned by a crew. This traditional approach is slow, expensive and carries significant health & safety risks.

It is therefore an object of the present invention to overcome one or more of the above mentioned issues.

### Summary of the invention

According to the present invention there is provided an unmanned marine surface vessel comprising a pair of outer hulls and a centre hull, the centre hull being dimensioned to define a shallower draught than the outer hulls when the vessel is deployed on the surface of a body of water.

Preferably, the centre hull is shaped to provide additional buoyancy to the outer hulls.

Preferably, the profile of the centre hull generates a non linear increase in buoyancy with increased draught.

Preferably, a submergible portion of the centre hull has a blunter cross section that a submergible portion of each of the outer hulls.

Preferably, the vessel comprises a power plant located in the centre hull, and a pair of motors powered by the power plant, one motor mounted to each of the outer hulls.

Preferably, each motor comprises a thruster and the pair of thrusters are operable to effect differential steering of the vessel.

Preferably, the vessel comprises a fuel tank located in the centre hull.

Preferably, the fuel tank is positioned about the centre of gravity of the vessel.

Preferably, the vessel comprises a battery located in the centre hull.

Preferably, the vessel comprises one or more solar panels.

Preferably, the vessel comprises a deck on which the one or more solar panels are located.

Preferably, the vessel comprises a frame extending above the hulls for carrying one or more sensors.

Preferably, the vessel comprises a sonar sensor extending downwardly from the centre hull.

Preferably, the sonar sensor extends downwardly from a position at or adjacent centre of mass of the vessel.

Preferably, the vessel comprises a thermal imaging camera.

Preferably, the vessel comprises computer and/or control equipment located in one or both outer hulls.

Preferably, the outer hulls and centre hull are substantially parallel.

### Brief description of the drawings

The present invention will now be described with reference to the accompanying drawings, in which:

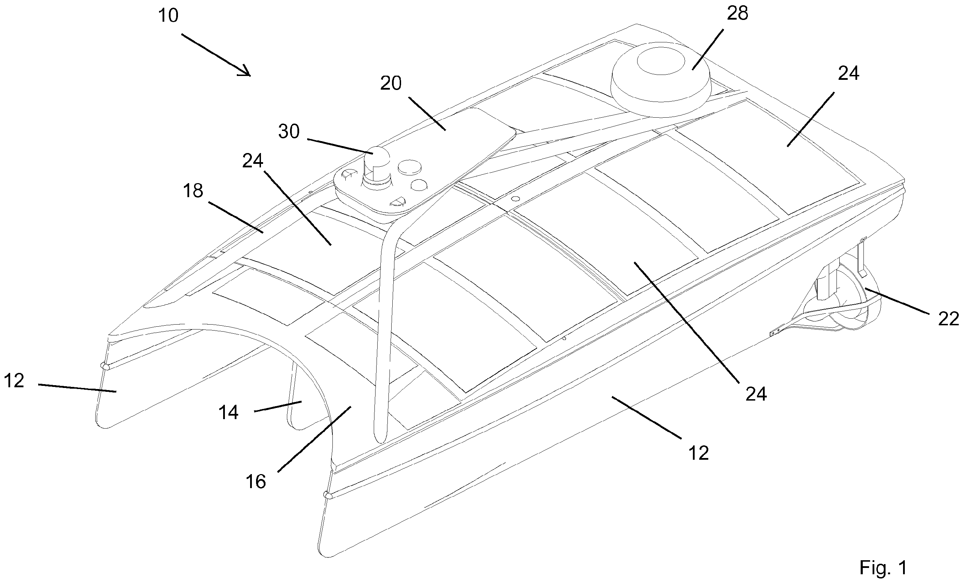

Figure 1 illustrates a perspective view of an unmanned marine surface vessel according to a preferred embodiment of the present invention;

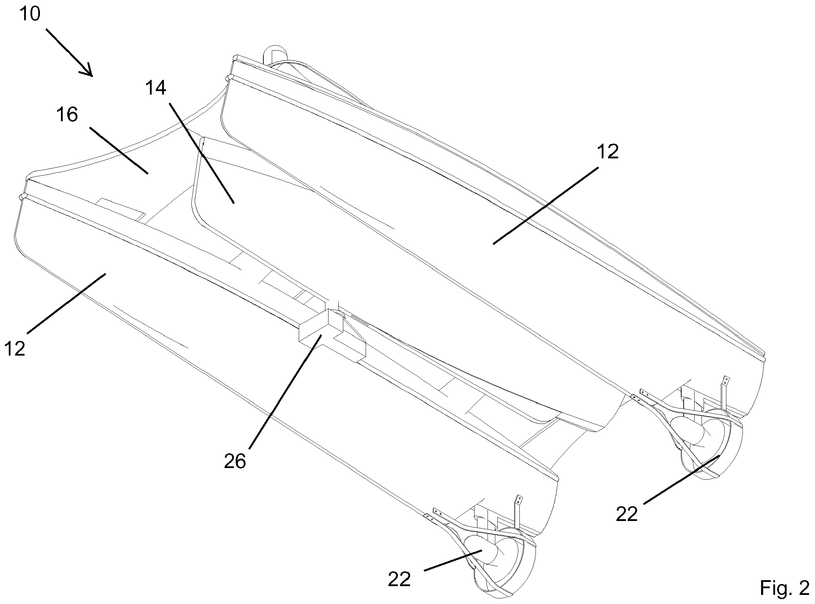

Figure 2 illustrates a perspective view from beneath of the vessel shown in Fig. 1;

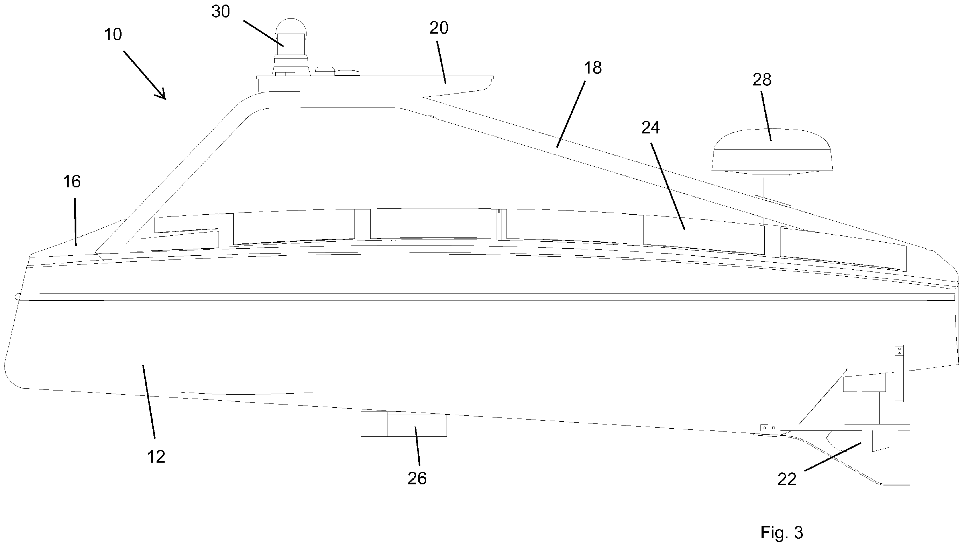

Figure 3 illustrates a side elevation of the vessel shown in Figs. 1 and 2;
Figure 4 illustrates a front elevation of the vessel;

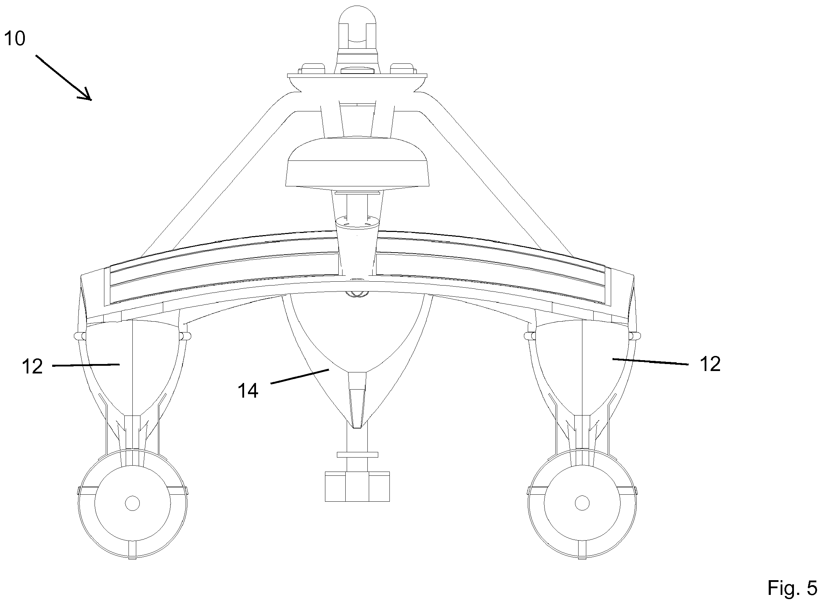

Figure 5 illustrates a rear elevation of the vessel;

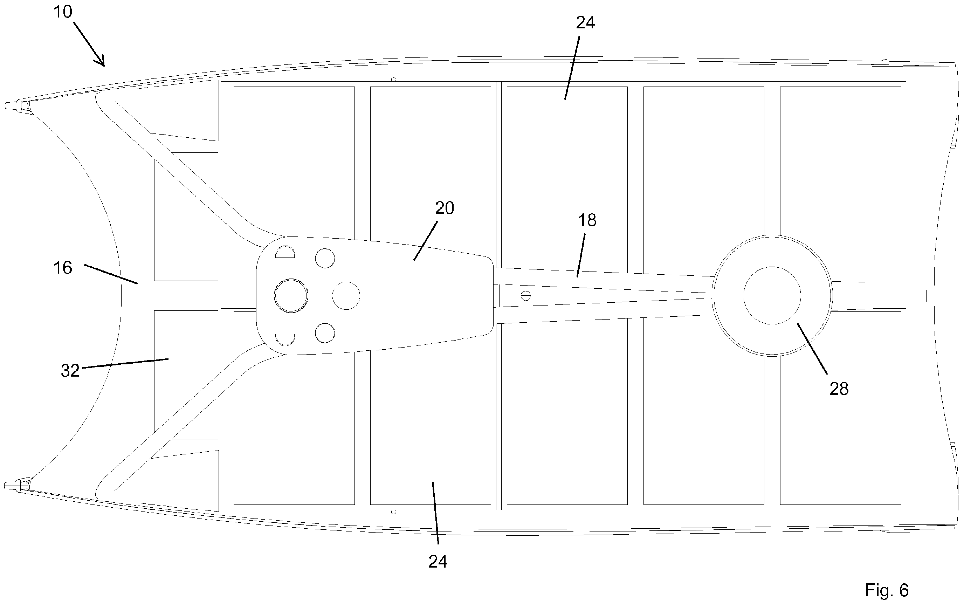

Figure 6 illustrates a plan view from above of the vessel shown in the previous figures; and

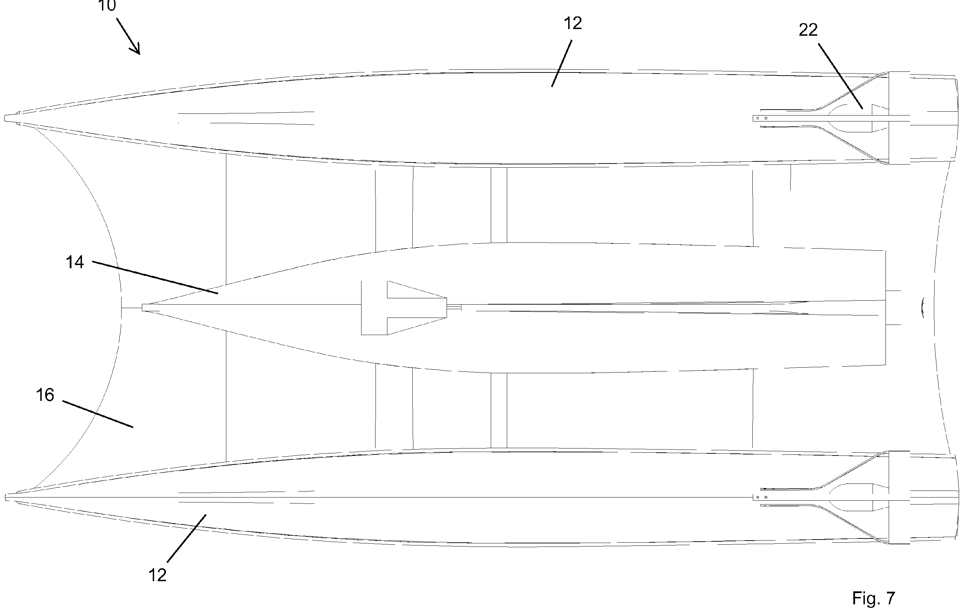

Figure 7 illustrates a plan view from beneath of the vessel shown in the previous figures.

### Detailed description of the drawings

Referring now to the accompanying drawings there is illustrated an unmanned marine surface vessel, generally indicated as (10), for use in collecting various ocean and/or environmental or other data, and is particularly designed for use in so called "over the horizon" deployments, facilitating significantly greater periods of time at sea, at significantly reduced costs and risk than a conventional manned vessel, thereby allowing substantially larger areas of ocean to be traversed and thus larger volumes of data to be collected and analysed.

As the vessel (10) is designed as an unmanned and potentially fully autonomous vehicle, there is no requirement for crew space, deck space, a wheel house, storage for food, safety equipment such as life jackets, etc. and as a result the vessel (10) is significantly reduced in size relative to a conventional vessel, in particular having a significantly reduced height and thereby dramatically lowering the centre of gravity in order to achieve improved stability when floating on the water. As a result of the reduced size and weight of the vessel (10) it is possible to operate the vessel (10) with a much smaller motor and fuel load that is required for conventional manned vessels.

The vessel (10) comprises an identical pair of outer hulls (12) spaced from one another and which, in use, are simultaneously located in the water in order to provide the primary buoyancy to the vessel (10). The vessel (10) additionally comprises a centre hull (14) disposed between and in parallel to the outer hulls (12). In the preferred embodiment illustrated the hulls (12, 14) are moulded as a monocoque form from fibreglass or the like, although it will be appreciated that any other suitable materials and/or methods of manufacture may be employed. The hulls (12, 14) are joined by an overarching deck (16) which again may be formed from any suitable material, and in the preferred embodiment is moulded from fibre glass and bonded to the outer hulls (12) and the centre hull (14). As will be described in greater detail hereinafter, both the outer hulls (12) and the centre hull (14) are hollow and adapted to carry both fixed equipment such as a power supply (not shown) and related fuel source (not shown) for the vessel (10), in addition to variable pay load depending on the operation being undertaken by the vessel (10).

The vessel (10) further comprises an upstanding gantry type frame (18) which is located above and over the deck (16), and in the preferred embodiment illustrated carries a platform (20) on which one or more sensors and/or transmitters or receivers or other such equipment may be mounted, as will be described in greater detail hereinafter. The frame (18) may be detachably mounted to the deck (16) or any other suitable location, and in the embodiment illustrated is formed from tubular steel or the like, although again any other suitable alternative material may be employed. The exact shape and dimensions of the frame (18) is a matter of design choice and may be varied as required, or could conceivably be completely omitted and the equipment located on the platform (20) redeployed around the vessel (10).

Located towards the rear of each of the outer hulls (12) is drive means in the form of a thruster (22) which are each fixed in position, that is to say they are not rotatable in order to effect steering of the vessel (10) as is normally the case, but rather steering is effected by differential thrust between the pair of thrusters (22). In the preferred embodiment illustrated each of the thrusters (22) is in the form of a nacelle including an enclosed or ducted propeller blade (not shown), although it will appreciated that any other functional alternative may be employed, for example a water jet type thruster.

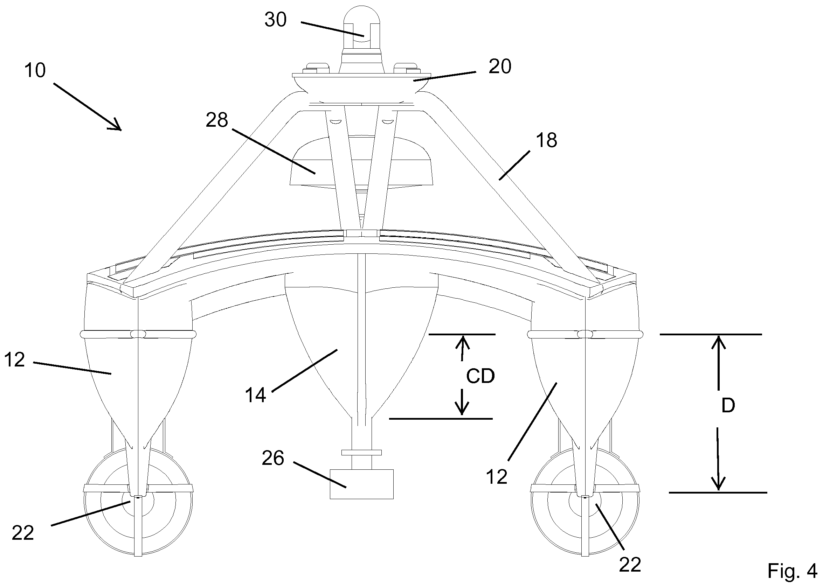

The pair of thrusters (22) are electrically powered from a battery (not shown) located, in the preferred embodiment illustrated, in the centre hull (14) as hereinafter described. The battery (not shown) is preferably charged by a diesel generator (not shown) which is again preferably located in the centre hull (14), supplied with fuel from a liquid fuel tank (not shown), again also preferably located in the centre hull (14). The generator (not shown) is one of the largest and heaviest components on the vessel (10) and positioning said component in the centre hull (14) allows the outer hulls (12) to retain a narrow and deep profile in order to render them hydrodynamically efficient, improving the energy efficiency of the vessel (10), while also providing significantly improved stability in rough waters as deep and narrow hulls tend to cut through the waves rather than being overly buoyant and then being lifted over waves. This narrow and deep profile is most clearly seen in Figure 4 of the drawings. In addition, locating the fuel tank (not shown) and the generator (not shown) adjacent to one another within the centre hull (14) simplifies the fuel feed from the tank to the generator. Similarly locating the large and heavy battery (not shown) in the centre hull (14) further allows for the above deep and narrow profile of the outer hulls (12), in addition to solving the trim problem that would otherwise occur if the generator (not shown) were placed in the centre hull (14) and the battery and/or fuel tank (not shown) were placed in one of the outer hulls (12).

In order to supplement the generator (not shown) the vessel (10) is also preferably provided with an array of solar panels (24) which may be positioned at any suitable location, and in the preferred embodiment illustrated cover much of the upper surface of the deck (16), although it will be understood that the number and configuration of the solar panels (24) may be altered as required. The hardware required to convert the electrical energy generated by the solar panels (24) to the correct current and/or voltage to charge the battery (not shown) may be located in the centre hull (14) and/or in one or other of the outer hulls (12). The provision of the solar panels (24) reduces the fuel consumption of the generator in producing electrical power for the thrusters (22), again increasing the range and/or ocean going time of the vessel (10).

One of the primary sensors provided on the vessel 10 is a sonar or ultrasonic sensor (26) which in the preferred embodiment illustrated is provided on the end of a pole which extends downwardly from the keel of the centre hull (14), and preferably at or adjacent the centre of mass of the vessel (10) in order to reduce the amount of movement experienced by the ultrasonic sensor (26) in undulating waters, and therefore potentially improving the operational ability in poor weather conditions. It will also be so understood that additional or alternative marine instruments (not shown) may be mounted in place of or in addition to the ultrasonic sensor (26).

The vessel (10) additionally comprises a satellite receiver (28) mounted above the deck (16) in a conventional protective housing and operable effect two way communicate with a suitable satellite system, for example the iridium constellation of low orbit satellites in order to allow extremely accurate positioning and navigation of the vessel (10), while also allowing route information to be transmitted to and from the vessel (10). GNSS positioning allows for accurate routing to be followed by the vessel (10), enables an operator to establish an exact position of the vessel (10) at any given time, and to establish whether or not the vessel (10) is moving or stationary. An existing route being navigated by the vessel (10) can be modified in real time and new routes sent to the vessel (10) to be applied immediately or when the current route has been completed.

For collision avoidance the vessel (10) may be provided with a camera (30), for example a thermal imaging camera which would then allow for night vision, the vessel (10) also being provided with image processing and recognition software running on suitable hardware (not shown) such as a programmable logic controller contained within one of the hulls (12, 14), to analyse image files to detect possible collision risks. If a collision risk exists, an alarm may be raised with a remote operator of the vessel (10) who can then decide on an appropriate course of action. A conventional automatic identification system (AIS) and a short range radar, for example having a range of fifty metres or less, are also preferably installed to improve collision avoidance. Each of these systems will again be controlled, preferably autonomously, via suitable control software and hardware contained on the vessel (10). Conventional navigation lights and/or a horn are also preferably provided on the platform (20) in order to provide visibility of the vessel (10) to other marine craft.

Turning then to the operation of the vessel (10), and referring in particular to Figure 4 it can be seen that the pair of outer hulls (12) are relatively narrow with respect to the centre hull (14), in addition to being of greater depth than the centre hull (14). As a result the draught D of the outer hulls (12) is greater than the centre draught CD of the centre hull (14), the hulls (12, 14) being configured such that when the vessel (10) is loaded to typical weight, the outer hulls (12) provide the majority of the buoyancy and the keel of the centre hull (14) is just in contact with the surface of the water such as to provide little or no buoyancy to the vessel (10). In this way the pair of outer hulls (12) are simultaneously located in the water and both providing buoyancy to the vessel 10, while retaining a narrow and therefore efficient profile in order to cut through the water/waves and therefore improve the efficiency of the vessel (10). It can be seen that the centre hull (14), in addition to having a shallower draught than the outer hulls (12), has a blunter or rounder cross sectional profile than the outer hulls (12), and as a result provides additional buoyancy to the outer hulls (12), when the centre hull (14) is submerged and therefore contributing buoyancy.

The blunted or rounded profile of the centre hull (14) results in the generation of a highly non-linear buoyancy that increases with increased draught of the centre hull (14). Thus as the payload of vessel (10) is increased beyond the above mentioned typical weight, the centre hull (14) will be displaced downwardly into the water and as a result the overall buoyancy of the vessel (10) rises dramatically, despite the very narrow profile of the outer hulls (12). This highly non-linear behaviour has the benefit of allowing the pay load of the vessel (10) to be increased dramatically with relatively little change in overall draught, in addition to increasing the safety and stability of the vessel (10) in rough conditions due to the reserve buoyancy of the centre hull (14). This reserve buoyancy again allows the outer hulls (12) to be tuned in profile to provide the optimum efficiency at typical vessel load.

As both of the outer hulls (12) are simultaneously located in the water at all times, it is possible to utilise differential thrust effected by the pair of thrusters to (22) to both drive and steer the vessel (10). The use of differential thrust allows the thrusters (22) to be static and therefore increase the simplicity of the design and manufacture of the vessel (10), and therefore increase the reliability thereof. In use the vessel (10) is entirely unmanned but may be remotely controlled by an operator, and/or may be entirely autonomous and pre-programmable to follow a way marked course while collecting various ocean data. The co-ordinates of the way points may be uploaded to the vessel (10) via the satellite link, with on-board control equipment (not shown) inputting these co-ordinates into the vessels auto-pilot system in order to drive and steer the vessel (10) using differential thrust. It is also envisaged that if a change to the planned mission is required new co-ordinates can be uploaded via the satellite link for the vessel (10) to follow. As a result the vessel (10) is capable and primarily intended for performing "over the horizon" operations, the progress of which may be monitored via the two way satellite link. A remote control function is however also preferably provided, in particular to allow the initial operator piloting of the vessel (10) during for example a trailer launch from a slipway or the like, while exiting simple ports or waterways, and for subsequent recovery onto a trailer or the like.

In order to load and/or unload equipment an array of hatches (not shown) are provided in the deck (16) and overlying both the outer hulls (12) and the centre hull (14) in order to provide access thereto. It is envisaged that both of the outer hulls (12) provide flexible storage capable of accepting different equipment depending on the particular operation being performed by the vessel (10). The outer hulls (12) would also preferably contain the navigational control systems, data processing and storage systems, and any related support equipment such as batteries, power converters, etc.

The vessel (10) of the present invention therefore provides a low cost, low risk, and long range means of collecting large quantities of ocean data.

## Claims

1. An unmanned marine surface vessel comprising a pair of outer hulls and a centre hull, the centre hull being dimensioned to define a shallower draught than the outer hulls when the vessel is deployed on the surface of a body of water.

2. An unmanned marine surface vessel according to claim 1 in which the centre hull is shaped to provide additional buoyancy to the outer hulls.

3. An unmanned marine surface vessel according to any preceding claim in which the profile of the centre hull generates a non linear buoyancy increase with increased draught.

4. An unmanned marine surface vessel according to claim 2 or 3 in which a submergible portion of the centre hull has a blunter cross section that a submergible portion of each of the outer hulls.

5. An unmanned marine surface vessel according to any preceding claim comprising a power plant located in the centre hull, and a pair of motors powered by the power plant, one motor mounted to each of the outer hulls.

6. An unmanned marine surface vessel according to claim 5 in which each motor comprises a thruster and the pair of thrusters are operable to effect differential steering of the vessel.

7. An unmanned marine surface vessel according to any preceding claim comprising a fuel tank located in the centre hull.

8. An unmanned marine surface vessel according to claim 7 in which the fuel tank is positioned about the centre of gravity of the vessel.

9. An unmanned marine surface vessel according to any preceding claim comprising a battery located in the centre hull.

10. An unmanned marine surface vessel according to any preceding claim comprising one or more solar panels.

11. An unmanned marine surface vessel according to claim 10 comprising a deck on which the one or more solar panels are located.

12. An unmanned marine surface vessel according to any preceding claim comprising a frame extending above the hulls for carrying one or more sensors.

13. An unmanned marine surface vessel according to any preceding claim comprising a sonar sensor extending downwardly from the centre hull.

14. An unmanned marine surface vessel according to claim 13 in which the sonar sensor extends downwardly from a position at or adjacent centre of mass of the vessel.

15. An unmanned marine surface vessel according to any preceding claim comprising a thermal imaging camera.

16. An unmanned marine surface vessel according to any preceding claim comprising computer and/or control equipment located in one or both outer hulls.

17. An unmanned marine surface vessel according to any preceding claim in which the outer hulls and centre hull are substantially parallel.
